# EUROPÄISCHE PATENTSCHRIFT

(11) **EP 3 464 947 B1**
(45) Veröffentlichungstag und Bekanntmachung des Hinweises auf die Patenterteilung: **24.06.2020**
(21) Anmeldenummer: 17718950.3
(22) Anmeldetag: 25.04.2017
(51) Int. Cl.: F16H 25/24

(54) **STELLEINRICHTUNG UND VERWENDUNG DER STELLEINRICHTUNG**
CONTROL DEVICE AND USE OF THE CONTROL DEVICE
DISPOSITIF DE RÉGLAGE ET UTILISATION DUDIT DISPOSITIF DE RÉGLAGE

(30) Priorität: 25.05.2016 DE 102016209161
(43) Veröffentlichungstag der Anmeldung: 10.04.2019
(73) Patentinhaber: ZF Friedrichshafen AG, 88046 Friedrichshafen (DE)
(72) Erfinder: VORTMEYER, Jens, 32361 Preussisch Oldendorf (DE); KLANK, Michael, 49084 Osnabrück (DE)
(74) Vertreter: ZF Friedrichshafen AG
(86) Internationale Anmeldenummer: PCT/EP2017/059774
(87) Internationale Veröffentlichungsnummer: WO 2017/202563

(56) Entgegenhaltungen:
- EP-A1- 1 801 457
- EP-A2- 1 884 684
- DE-A1- 3 910 814

## Beschreibung

Die Erfindung betrifft eine Stelleinrichtung, welche eine Spindel mit einem Spindelgewinde sowie eine Spindelmutter mit einem Muttergewinde, welches mit dem Spindelgewinde in Eingriff steht, umfasst. Die Erfindung betrifft ferner eine Verwendung der Stelleinrichtung.

Derartige Stelleinrichtungen mit einem Gewindetrieb sind in verschiedenen Ausführungsformen bekannt. Bei einer ersten Ausführungsform, einem Spindelantrieb mit Trapezgewinde, stehen das Außengewinde der Spindel und das Innengewinde der Spindelmutter vollumfänglich in Eingriff, wobei die Gewindeflanken direkt an einander anliegen und die Kraftübertragung über die Flanken erfolgt. Ein derartiger Spindelantrieb sowie ein Aktuator für eine Lenkung mit einem solchen Spindelantrieb wurden durch die DE 10 2014 206 934 A1 bekannt. Derartige Spindelantriebe, auch Gleitgewindetriebe genannt, sind reibungsbehaftet und weisen einen relativ niedrigen Wirkungsgrad auf.

Bekannt sind auch Kugelgewindetriebe, bei welchen die Kraftübertragung über Wälzkörper, insbesondere Kugeln erfolgt. Durch die EP 1 373 052 B1 wurde ein derartiges Kugelgewindegetriebe bekannt, welches eine geringere Reibung und demzufolge einen höheren Wirkungsgrad als ein Trapezgewinde aufweist.

EP 1 884 684 A2 offenbart des Weiteren ein Getriebe zur Umwandlung einer Rotationsbewegung in eine Linearbewegung. Das Getriebe aus einer Gewindespindel und einem Abstützlager, einem Lagergehäuse und einer achsparallel zur Gewindespindel gelagerten Mutter ist derart ausgebildet, dass die Achsen von Mutter und Gewindespindel eine Exzentrizität zueinander aufweisen.

Ausgehend von dem vorgenannten Stand der Technik, verfolgt die Erfindung das Ziel einer weiteren Verbesserung einer Stelleinrichtung.

Die Erfindung umfasst die Merkmale der unabhängigen Patentansprüche. Vorteilhafte Ausgestaltungen ergeben sich aus den Unteransprüchen.

Nach einem ersten Aspekt der Erfindung ist vorgesehen, dass das Spindelgewinde einen geringeren Durchmesser als das Muttergewinde aufweist und die Spindel mit ihrer Längsachse gegenüber der Längsachse der Spindelmutter versetzt angeordnet ist, so dass das Spindelgewinde - in Umfangsrichtung gesehen - nur partiell mit dem Muttergewinde in Eingriff steht. Die Spindel weist zusätzlich, axial versetzt zum Spindelgewinde, eine Außenverzahnung auf, welche erfindungsgemäß mit einer Innenverzahnung des Muttergewindes in Eingriff steht. Die Spindelmutter ist derart in Drehrichtung antreibbar, dass sich zwischen der Spindelmutter und der Spindel eine Taumelbewegung ergibt, wobei das Spindelgewinde am Muttergewinde abrollt und gleichzeitig einen Axialhub bzw. eine Verschiebung der Spindel entlang ihrer Spindelachse erzeugt. Durch die Verzahnung der Spindel mit der Spindelmutter ergibt sich ein festes Drehzahlverhältnis zwischen Spindel und Spindelmutter, so dass ein Schlupf zwischen Spindelgewinde und Muttergewinde vermieden wird.

Erfindungsgemäß sind die Übersetzungen von Spindel- und Muttergewinde einerseits und der Spindel- und Mutterverzahnungen andererseits gleich, wobei sich die Übersetzungsverhältnisse jeweils über die Teilkreise der Gewinde und der Teilkreise der Verzahnungen definieren. Durch die Identität der Übersetzungsverhältnisse wird eine schlupffreie Abrollbewegung des Gewindeeingriffs erzielt. Erfindungsgemäß sind dabei die Innen- und Außenverzahnungen als Geradverzahnungen ausgebildet. Damit wird eine Axialbewegung zwischen Spindel und Spindelmutter ermöglicht.

Der erfindungsgemäße Gewindetrieb wird im Folgenden auch als Rollgewindetrieb bezeichnet. Im Gegensatz zum herkömmlichen Gleitgewindetrieb findet beim erfindungsgemäßen Rollgewindetrieb keine mit relativ hoher Reibung behaftete Gleitreibung, sondern ein schlupffreies Abrollen des Spindelgewindes auf dem Muttergewinde statt. Das Abrollen verursacht eine geringere Reibung, die Rollreibung, und hat damit einen erhöhten Wirkungsgrad der Stelleinrichtung zur Folge. Um eine in axialer Richtung der Spindel erfolgende Stellbewegung zu erreichen, bedarf es daher einer geringeren Energie zum Antrieb der Spindelmutter bzw. zum Bewegen der Spindel.

Nach einer bevorzugten Ausführungsform ist die Spindelmutter durch mindestens einen Exzenter antreibbar, wobei der Exzenter eine mit der Spindelachse identische Drehachse sowie eine mit der Mutterlängsachse identische Exzenterachse aufweist. Mittels des Antriebes durch den Exzenter wird eine Taumelbewegung zwischen Spindel und Spindelmutter erreicht, wobei sich ein Verdrehwinkel zwischen der Spindelmutter und der Spindel einstellt, der zu einem axialen Hub bzw. zu einer axialen Verschiebung der Spindel führt.

Nach einer weiteren bevorzugten Ausführungsform weist der Exzenter eine zur Drehachse exzentrisch und zur Exzenterachse koaxial angeordnete Lageröffnung auf, in welcher die Spindelmutter drehbar gelagert ist. Über dieses Drehlager wird die Taumelbewegung der Spindelmutter erzeugt. Das Drehlager ist bevorzugt als Nadel- oder Hülsenlager ausgebildet.

Bevorzugt ist der Exzenter durch einen Elektromotor antreibbar, sei es direkt oder mittelbar über ein zwischengeschaltetes Getriebe oder ein Übertragungsmittel, wie z.B. einen Antriebsriemen, der als Zahnriemen ausgebildet sein kann. Durch den elektrischen Drehantrieb wird letztlich die Axialbewegung der Spindel erzeugt.

Der Elektromotor (E-Motor) ist vorzugsweise als bürstenloser Vernier-Elektromotor ausgebildet. Diese Art von E-Motoren stellen einen in hohem Maße effizienten Elektromotor zur Verfügung, der im Vergleich zu herkömmlichen Elektromotoren eine verbesserte Volumeneffizienz aufweist. Ein Vernier-E-Motor kann bei geringerem Volumen ein höheres Drehmoment erzeugen als ein herkömmlicher E-Motor mit entsprechend größerem Volumen. Mit anderen Worten kann ein E-Motor verkleinert werden und gleichzeitig eine höhere Leistung aufweisen, oder die gleiche Größe wie bei einem herkömmlichen E-Motor wird beibehalten und die Leistung steigt durch die Vernier-Bauweise ernorm. Es kann somit für die Stelleinrichtung bzw. die Lenkung, insbesondere Hinterachslenkung ein kompakt bauender und somit leichter, leistungseffizienter E-Motor mit ausreichend Drehmoment zum Antrieb des Spindeltriebes zur Verfügung gestellt werden. Hierzu wird bevorzugt der E-Motor mit einem äußeren Stator bzw. innenliegendem Rotor ausgebildet.

Nach einer weiteren bevorzugten Ausführungsform ist der E-Motor, insbesondere dessen Rotor koaxial zur Drehachse des Exzenters und damit auch koaxial zur Spindelachse angeordnet. Dadurch wird eine besonders kompakte Bauweise in radialer Richtung erzielt, insbesondere wenn ein Vernier-Motor verwendet wird.

Nach einer weiteren bevorzugten Ausführungsform ist der Rotor des E-Motors stirnseitig, beispielsweise über eine Hohlwelle drehfest mit dem mindestens einen Exzenter verbunden. Bevorzugt ist der Rotor auf beiden Stirnseiten mit einem Exzenter verbunden, so dass die Spindelmutter von zwei symmetrisch zum Elektromotor angeordneten Exzentern angetrieben wird. Hierdurch werden weitere Bauraumvorteile sowie eine ausgezeichnete Lagerung erzielt.

Nach einer weiteren bevorzugten Ausführungsform erfolgt der Gewindeeingriff unter einer radialen Vorspannung der Spindelmutter zur Spindel. Damit kann ein Axialspiel zwischen den Gewindeflanken der Spindelmutter und der Spindel eliminiert werden, was zu einer genaueren axialen Positionierung der Spindel und zu einer Verbesserung der akustischen Verhältnisse führt.

Nach einem weiteren Aspekt der Erfindung ist eine Verwendung der erfindungsgemäßen Stelleinrichtung mit dem erfindungsgemäßen Rollgewindetrieb als Aktuator einer Hinterachslenkung eines Kraftfahrzeuges vorgesehen. Aufgrund des geringeren Energiebedarfs des erfindungsgemäßen Rollgewindetriebes sowie des Vernier-Elektromotors wird weniger Energie aus dem Bordnetz des Kraftfahrzeuges für die Verstellung der Hinterräder entnommen als bei Einsatz einer Stelleinrichtung mit herkömmlichem elektromotorisch angetriebenem Trapezgewindespindelantrieb. Darüber hinaus ergeben sich als Vorteile eine höhere Genauigkeit in der Verstellung aufgrund eines geringeren Axialspiels, ein geringerer Kraftaufwand bei der Verstellung sowie geringere Betriebsgeräusche für den Aktuator.

Die Verwendung des erläuterten Gewindetriebes als Rollgewindetrieb mit Exzentergetriebe zur axialen Verlagerung der Spindel ermöglicht aufgrund des verwendeten Trapezgewindes neben einem energieeffizienten Antrieb eine Selbsthemmung des Gewindetriebes. Das ist insbesondere bei einem Ausfall des elektrischen Antriebs vorteilhaft, weil ein unkontrolliertes axiales Wandern der Spindel vermieden wird, welches beim Einsatz in einer Lenkung, insbesondere der Hinterachslenkung ein Verstellen der lenkbaren Räder zur Folge hätte und zu einem unkontrollierbaren Fahrzustand führen könnte. Eine zusätzliche, z.B. magnetische Bewegungssperre der Spindel ist nicht notwendig.
Aufgrund der speziellen Anordnung von Spindelmutter und Spindel und der Kombination mit einem Rollgewindetrieb wird auch bei Verwendung des Trapezgewindes ein reibungsarmer Betrieb gewährleistet. Im Gegensatz zu einem Spindeltrieb mit Trapezgewinde, bei welchem die Spindelmutter mit ihrem gesamten Gewinde in Eingriff mit der Spindel steht, sind bei dem Rollgewindetrieb nur wenige Anteile der Flanken der Spindelmutter mit den Flanken der Spindel im Eingriff. Somit bedeutet dieses auch weniger Reibung und damit ein geringer Energiebedarf, wie zuvor bereits angesprochen.

Der vorgenannte Gewindetrieb eignet sich auch für andere Anwendungen, beispielsweise bei Fensterhebern in Fahrzeugtüren oder ähnlichen Stellantrieben. Auch hier wird ein energieeffizienter, drehmomentstarker Antrieb als auch eine Selbsthemmung benötigt.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1 und: eine Stelleinrichtung mit einem erfindungsgemäßen Rollgewindetrieb
- Fig. 2 (a, b): eine schematische Darstellung des Bewegungsablaufes des Rollgewindetriebes.

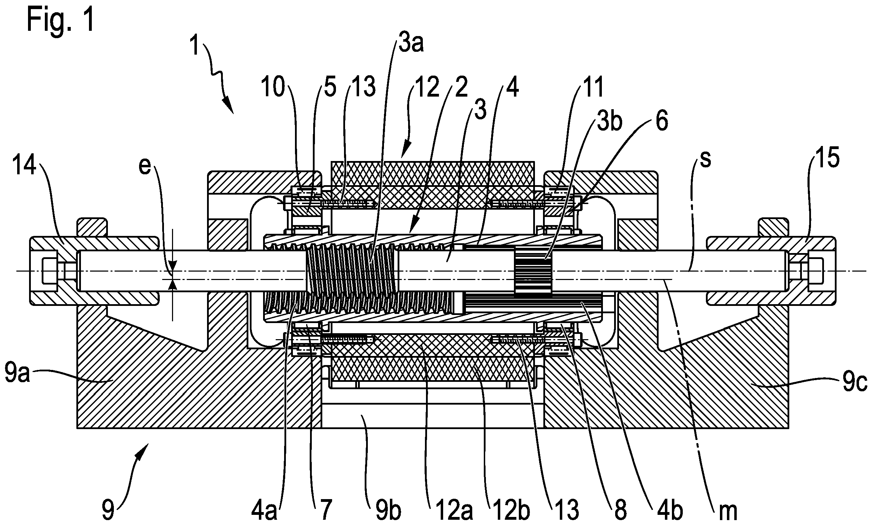

Fig. 1 zeigt in einem Längsschnitt eine Stelleinrichtung 1 mit einem erfindungsgemäßen Rollgewindetrieb 2. Der Begriff Rollgewindetrieb 2 wird speziell für den erfindungsgemäßen Gewindetrieb verwendet und unterscheidet sich von dem aus dem Stand bekannten Begriff Rollengewindetrieb, bei welchem zusätzlich zu einer Gewindespindel und einer Spindelmutter Planetengewinderollen verwendet werden.

Der hier verwendete Rollgewindetrieb 2 umfasst eine Spindel 3 mit einer Spindelachse s, einem als Trapezgewinde ausgebildeten Spindelgewinde 3a und einer als Geradverzahnung ausgebildeten Außenverzahnung 3b, auch Spindelverzahnung 3b genannt. Der Rollgewindetrieb 2 umfasst ferner eine Spindelmutter 4 mit einer Längs- oder Mutterlängsachse m, mit einem als Trapezgewinde ausgebildeten Innenoder Muttergewinde 4a sowie einer als Geradverzahnung ausgebildeten Innen- oder Mutterverzahnung 4b. Die Spindelachse s ist gegenüber der Mutterlängsachse m um den Betrag einer Exzentrizität e achsparallel versetzt. Der Durchmesser des Muttergewindes 4a ist um den Betrag der zweifachen Exzentrizität e größer als der Durchmesser des Spindelgewindes 3a. Das Spindelgewinde 3a steht mit dem Muttergewinde 4a in Eingriff, allerdings aufgrund der unterschiedlichen Gewindedurchmesser nur über einen Teil des Umfanges. Die Spindelverzahnung 3b steht mit der Mutterverzahnung 4b in Eingriff, so dass sich ein festes Drehzahlverhältnis zwischen Spindel 3 und Spindelmutter 4 ergibt, wobei sich das Zahnradübersetzungsverhältnis i_{z} aus den Teilkreisen der Verzahnungen 3b, 4b oder deren unterschiedliche Zähnezahlen ergibt. Zwischen dem Muttergewinde 4a und dem Spindelgewinde 3a besteht ein Gewindeübersetzungsverhältnis i_{g}, welches sich über das Verhältnis der Teilkreise des Muttergewindes 4a und des Spindelgewindes 3a bestimmt. Beide Übersetzungsverhältnisse, das Gewindeübersetzungsverhältnis i_{g} und das Zahnradübersetzungsverhältnis i_{z} sind gleich. Daraus ergibt sich ein schlupffreies Abrollen des Spindelgewindes 3a an dem Muttergewinde 4a. Im Unterschied zum Gleit- oder Bewegungsgewindetrieb beim Stand der Technik findet bei dem erfindungsgemäßen Rollgewindetrieb 2 keine Gleitreibung, sondern ein Abrollen statt, welches mit einer wesentlich geringeren Reibung als der Gleitreibung verbunden ist. Daraus resultiert ein erhöhter Wirkungsgrad des Rollgewindetriebes 2. Die Spindelmutter 4 wird über zwei als Scheiben ausgebildete Exzenter 5, 6 gelagert und gleichzeitig angetrieben. Die beiden Exzenter 5, 6, auch Exzenterscheiben 5, 6 genannt, weisen eine gemeinsame Drehachse auf, welche mit der Spindelachse s identisch ist. In den Exzentern 5, 6 sind exzentrisch zur Spindel- und Drehachse s Lager 7, 8 zur Aufnahme der Spindelmutter 4 angeordnet. Der Rollgewindetrieb 2 mit den beiden Exzentern 5, 6 ist in einem Gehäuse 9, welches hier modellhaft dargestellt ist und aus einem linken Gehäuseteil 9a, einem mittleren Gehäuseteil 9b und einem rechten Gehäuseteil 9c, besteht, gelagert. Die Exzenterscheiben 5, 6 sind über weitere Lager 10, 11 gegenüber dem linken Gehäuseteil 9a und dem rechten Gehäuseteil 9c abgestützt. Zwischen den beiden Exzenterscheiben 5, 6 ist ein als Hohlwellenmotor ausgebildeter Elektromotor 12 koaxial zu der Spindelachse s und damit zur Drehachse der beiden Exzenter 5, 6 angeordnet. Der Elektromotor 12 weist einen als Hohlzylinder ausgebildeten Rotor 12a sowie einen gegenüber dem mittleren Gehäuseteil 9b abgestützten Stator 12b auf. Der Rotor 12a ist stirnseitig über als Schraubbolzen 13 ausgebildete Verbindungselemente 13 drehfest mit den beiden Exzenterscheiben 5, 6 verbunden. Die Enden der Spindel 3 sind mit Lager- oder Aufschraubzapfen 14, 15, welche in dem linken Gehäuseteil 9a und dem rechten Gehäuseteil 9c axial gleitend abgestützt sind, verbunden.

Die Stelleinrichtung 1 mit dem Rollgewindetrieb 2 arbeitet wie folgt: Der Rotor 12a des Elektromotors 12 treibt die beiden Exzenterscheiben 5, 6, welche um die Spindelachse s drehen, an. Dabei wird die exzentrisch in den Exzenterscheiben 5, 6 gelagerte Spindelmutter 4 in Drehrichtung mitgenommen, wobei sich die Spindelmutter 4 in den beiden Lagern 7, 8 um sich selbst, d. h. um die Mutterlängsachse m dreht. Die Drehbewegung der Spindelmutter 4 bewirkt ein Abrollen des Muttergewindes 4a am Spindelgewinde 3a, wodurch ein Axialhub der Spindel 3, d. h. eine Längsbewegung in Richtung der Spindelachse s erzeugt wird. Diese Stellbewegung kann auf hier nicht dargestellte Stellglieder übertragen werden. Beispielsweise können die mit der Spindel 3 verbundenen Aufschraubzapfen 14, 15 in einem Aktuatorgehäuse für eine Hinterachslenkung eines Kraftfahrzeuges gelagert sein und jeweils mit einem Lenkgestänge zur Veränderung des Lenkwinkels der Hinterräder eines Kraftfahrzeuges verbunden werden. Bezüglich eines Aktuators mit Spindelantrieb wird auf die eingangs genannte DE 10 2014 206 934 A1 verwiesen, die vollumfänglich in den Gegenstand dieser Anmeldung einbezogen wird.

Die Spindel 3 kann - was hier nicht dargestellt ist - im Bereich des Spindelgewindes 3a mit einer Querkraft (quer zur Spindelachse s) beaufschlagt werden, sodass der Gewindeeingriff unter einer radial gerichteten Vorspannung erfolgt. Damit wird ein Axialspiel zwischen den Gewindeflanken des Spindelgewindes 3a und des Muttergewindes 4a minimiert oder eliminiert. Ein minimales Axialspiel erhöht die Genauigkeit der Stellbewegung und reduziert etwaige Geräusche, welche bei einem erhöhten Axialspiel auftreten könnten.

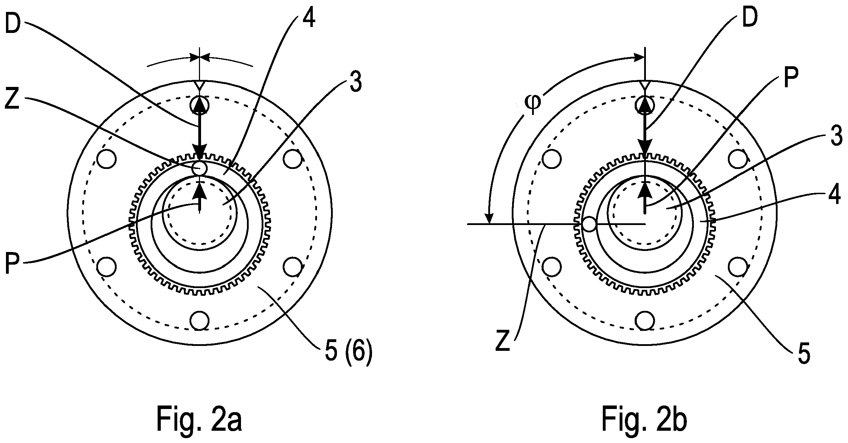

Fig. 2a und Fig. 2b zeigen in schematischer Darstellung den Bewegungsablauf des Rollgewindetriebes 2 (Fig. 1) in einer Ansicht in Richtung der Spindelachse s (Fig. 1), wobei hier nur die Spindel 3, die Spindelmutter 4 sowie der Exzenter 5 (identisch mit Exzenter 6) schematisch dargestellt sind.

Fig. 2a zeigt eine Nullstellung der rotierenden Teile 3, 4, 5, markiert durch einen Pfeil P für die Spindel 3, einen punktförmigen Zeiger Z für die Mutter 4 und einen Doppelpfeil D für den Exzenter 5.

Fig. 2b zeigt die Position der Teile 3, 4, 5, nachdem der Exzenter 5 eine volle Umdrehung (360°) aus der Nullposition gemäß Fig. 2a g emacht hat. Nach Vollendung dieser Umdrehung hat sich zwischen der Spindel 3 und der Spindelmutter 4 ein relativer Drehwinkel, bezeichnet mit ϕ, ergeben, welcher in der Zeichnung etwa 90° beträgt. Dieser relative Drehwinkel ϕ führt zu einem Axialhub der Spindel 3, d. h. einer Längsbewegung in Richtung der Spindelachse s (Fig. 1). Die Spindelmutter 4 führt aufgrund der Mitnahme durch den Exzenter 5 in Drehrichtung eine Taumelbewegung um die gehäusefest gelagerte Spindel 3 aus.

### Bezugszeichen

- 1: Stelleinrichtung
- 2: Rollgewindetrieb
- 3: Spindel
- 3a: Spindelgewinde
- 3b: Spindelverzahnung
- 4: Spindelmutter
- 4a: Muttergewinde
- 4b: Mutterverzahnung
- 5: erster Exzenter
- 6: zweiter Exzenter
- 7: Lager Spindelmutter/Exzenter
- 8: Lager Spindelmutter/Exzenter
- 9: Gehäuse
- 9a: linkes Gehäuseteil
- 9b: mittleres Gehäuseteil
- 9c: rechtes Gehäuseteil
- 10: Lager Exzenter/Gehäuse
- 11: Lager Exzenter/Gehäuse
- 12: Elektromotor
- 12a: Rotor
- 12b: Stator
- 13: Schraubbolzen
- 14: Lagerzapfen
- 15: Lagerzapfen
- e: Exzentrizität
- m: Mutterlängsachse
- s: Spindelachse
- D: Doppelpfeil
- P: Pfeil
- Z: Zeiger
- ϕ: relativer Drehwinkel

## Patentansprüche

1. Stelleinrichtung, insbesondere für eine Lenkung, vorzugsweise Hinterachslenkung, aufweisend eine ein Innen- oder Muttergewinde (4a) sowie eine Innenverzahnung (4b) umfassende Spindelmutter (4) mit einer Mutterlängsachse (m), eine Spindel (3) mit einer Spindelachse (s) und mit einem Außen- oder Spindelgewinde (3a) sowie einer Außenverzahnung (3b), wobei der Durchmesser des Spindelgewindes (3a) kleiner als der Durchmesser des Muttergewindes (4a) ist, wobei die Spindelachse (s) gegenüber der Mutterlängsachse (m) um den Betrag einer Exzentrizität (e) achsparallel versetzt angeordnet ist, wobei das Spindelgewinde (3a) mit einem Teil seines Umfanges mit dem Muttergewinde (4a) in Eingriff steht, wobei das Spindel- und das Muttergewinde (3a, 4a) ein Gewindeübersetzungsverhältnis (i_{g}) aufweisen und wobei die Spindelmutter (4) in Drehrichtung um die Mutterlängsachse (m) und die Spindelachse (s) antreibbar ist, so dass die Spindel (3) entlang ihrer Spindelachse (s) verschiebbar ist,
**dadurch gekennzeichnet, dass** die Außenverzahnung (3b) mit der Innenverzahnung (4b) in Eingriff steht und die Außen- und die Innenverzahnungen (3b, 4b) ein Zahnradübersetzungsverhältnis (i_{z}) aufweisen, und dass das Gewindeübersetzungsverhältnis (i_{g}) und das Zahnradübersetzungsverhältnis (i_{z}) gleich sind, wobei die Innen- und die Außenverzahnungen als Geradverzahnungen (3b, 4b) ausgebildet sind.

2. Stelleinrichtung nach Anspruch 1, **dadurch gekennzeichnet, dass** die Spindelmutter (4) durch mindestens einen Exzenter (5, 6) mit einer der Spindelachse (s) entsprechenden Drehachse (s) und einer der Mutterlängsachse (m) entsprechenden Exzenterachse (m) antreibbar ist.

3. Stelleinrichtung nach Anspruch 2, **dadurch gekennzeichnet, dass** der mindestens eine Exzenter (5, 6) eine zur Drehachse (s) koaxial und exzentrisch zur Mutterlängsachse (m) angeordnete Lageröffnung aufweist, in welcher die Spindelmutter (4) drehbar gelagert ist.

4. Stelleinrichtung nach Anspruch 2 oder 3, **dadurch gekennzeichnet, dass** der mindestens eine Exzenter (5, 6) durch einen Elektromotor (12), insbesondere vom Typ eines Vernier-Elektromotors, antreibbar ist.

5. Stelleinrichtung nach Anspruch 4, **dadurch gekennzeichnet, dass** der Elektromotor als Hohlwellenmotor (12) ausgebildet und koaxial zur Spindelachse (s) angeordnet ist.

6. Stelleinrichtung nach Anspruch 5, **dadurch gekennzeichnet, dass** der Elektromotor (12) einen Rotor (12a) aufweist und dass der Rotor (12a) stirnseitig mit dem mindestens einen Exzenter (5, 6) drehfest verbunden ist.

7. Stelleinrichtung nach einem der Ansprüche 1 bis 6, **dadurch gekennzeichnet, dass** der Eingriff des Spindelgewindes (3a) in das Muttergewinde (4a) unter einer radial gerichteten Vorspannung erfolgt.

8. Verwendung der Stelleinrichtung nach einem der Ansprüche 1 bis 7 als Aktuator einer Hinterachslenkung eines Kraftfahrzeuges.

## Claims

1. Actuating device, in particular for a steering system, preferably a rear-axle steering system, having a spindle nut (4) which comprises an internal or nut thread (4a) and an internal tooth system (4b) and has a nut longitudinal axis (m), a spindle (3) with a spindle axis (s) and with an external or spindle thread (3a) and an external tooth system (3b), wherein the diameter of the spindle thread (3a) is smaller than the diameter of the nut thread (4a), wherein the spindle axis (s) is arranged in an axially parallel offset manner in relation to the nut longitudinal axis (m) by the magnitude of an eccentricity (e), wherein the spindle thread (3a), by way of a portion of its circumference, engages with the nut thread (4a), wherein the spindle thread and the nut thread (3a, 4a) have a thread transmission ratio (i_{g}), and wherein the spindle nut (4) can be driven in the rotation direction about the nut longitudinal axis (m) and the spindle axis (s), so that the spindle (3) can be displaced along its spindle axis (s),
**characterized in that** the external tooth system (3b) engages with the internal tooth system (4b) and the external and the internal tooth systems (3b, 4b) have a gear transmission ratio (i_{z}), and **in that** the thread transmission ratio (i_{g}) and the gear transmission ratio (i_{z}) are the same, wherein the internal and the external tooth systems are designed as straight tooth systems (3b, 4b) .

2. Actuating device according to Claim 1, **characterized in that** the spindle nut (4) can be driven by at least one eccentric (5, 6) with a rotation axis (s) which corresponds to the spindle axis (s) and an eccentric axis (m) which corresponds to the nut longitudinal axis (m).

3. Actuating device according to Claim 2, **characterized in that** the at least one eccentric (5, 6) has a bearing opening which is arranged coaxially in relation to the rotation axis (s) and eccentrically in relation to the nut longitudinal axis (m), in which the spindle nut (4) is rotatably mounted.

4. Actuating device according to Claim 2 or 3, **characterized in that** the at least one eccentric (5, 6) can be driven by an electric motor (12), in particular a Vernier-type electric motor.

5. Actuating device according to Claim 4, **characterized in that** the electric motor is designed as a hollow-shaft motor (12) and is arranged coaxially in relation to the spindle axis (s).

6. Actuating device according to Claim 5, **characterized in that** the electric motor (12) has a rotor (12a), and **in that** the rotor (12a), at the end side, is connected in a rotationally fixed manner to the at least one eccentric (5, 6).

7. Actuating device according to one of Claims 1 to 6, **characterized in that** the engagement of the spindle thread (3a) into the nut thread (4a) takes place under a radially directed prestress.

8. Use of the actuating device according to one of Claims 1 to 7 as an actuator of a rear-axle steering system of a motor vehicle.

## Revendications

1. Dispositif de commande, notamment d'une direction, de préférence d'une direction d'essieu arrière, ledit dispositif comprenant un écrou de broche (4) pourvu d'un filetage intérieur ou d'écrou (4a) et une denture intérieure (4b) pourvue d'un axe longitudinal d'écrou (m), une broche (3) pourvue d'un axe de broche (s) et d'un filetage extérieur ou de broche (3a) ainsi que d'une denture extérieure (3b), le diamètre du filetage de broche (3a) étant inférieur au diamètre du filetage d'écrou (4a), l'axe de broche (s) étant disposé de manière décalée parallèlement à l'axe longitudinal d'écrou (m) de la valeur d'une excentricité (e), le filetage de l'écrou (4a) s'engrenant avec le filetage de broche (3a) sur une partie de sa circonférence, les filetages de broche et d'écrou (3a, 4a) présentant un rapport de filetage (i_{g}) et l'écrou de broche (4) pouvant être entraîné dans le sens de rotation autour de l'axe longitudinal (m) et de l'axe de broche (s) de sorte que la broche (3) peut coulisser le long de son axe de broche (s),
**caractérisé en ce que** la denture extérieure (3b) s'engrène avec la denture intérieure (4b) et les dentures extérieure et intérieure (3b, 4b) présentent un rapport d'engrènement (i_{z}) et **en ce que** le rapport de filetage (i_{g}) et le rapport d'engrènement (i_{z}) sont égaux, les dentures intérieure et extérieure étant conçues comme des dentures droites (3b, 4b).

2. Dispositif de commande selon la revendication 1, **caractérisé en ce que** l'écrou de broche (4) peut être entraîné par au moins un excentrique (5, 6) pourvu d'un axe de rotation (s) correspondant à l'axe de broche (s) et d'un axe d'excentrique (m) correspondant à l'axe longitudinal d'écrou (m).

3. Dispositif de commande selon la revendication 2, **caractérisé en ce que** l'au moins un excentrique (5, 6) comporte une ouverture de palier disposée coaxialement par rapport à l'axe de rotation (s) et excentriquement par rapport à l'axe longitudinal d'écrou (m), l'écrou de broche (4) étant monté de manière rotative.

4. Dispositif de commande selon la revendication 2 ou 3, **caractérisé en ce que** l'au moins un excentrique (5, 6) peut être entraîné par un moteur électrique (12), notamment du type moteur électrique Vernier.

5. Dispositif de commande selon la revendication 4, **caractérisé en ce que** le moteur électrique est conçu comme un moteur à arbre creux (12) et est disposé coaxialement par rapport à l'axe de broche (s).

6. Dispositif de commande selon la revendication 5, **caractérisé en ce que** le moteur électrique (12) comporte un rotor (12a) et **en ce que** le rotor (12a) est relié de manière rotative à l'au moins un excentrique (5, 6).

7. Dispositif de commande selon l'une des revendications 1 à 6, **caractérisé en ce que** l'engrènement du filetage de broche (3a) dans le filetage d'écrou (4a) est effectué sous précontrainte radiale.

8. Utilisation du dispositif de commande selon l'une des revendications 1 à 7 comme actionneur d'une direction d'essieu arrière d'un véhicule automobile.
